# EUROPÄISCHE PATENTANMELDUNG

(11) **EP 4 667 139 A1**
(43) Veröffentlichungstag der Anmeldung: **24.12.2025**
(21) Anmeldenummer: 24183301.1
(22) Anmeldetag: 20.06.2024
(51) Int. Cl.: B22F 10/28, B23K 20/12, B33Y 70/10, B33Y 80/00

(54) **WERKZEUG FÜR DAS REIBRÜHRSCHWEISSEN**

(71) Anmelder: Plansee SE, 6600 Reutte (AT)
(72) Erfinder: Distl, Benedikt, 6600 Reutte (AT); Singer, Peter, 6600 Reutte (AT); MAYR-SCHMOELZER, Bernhard, 6600 Reutte (AT); Leichtfried, Gerhard, 6020 Innsbruck (AT); Braun, Jakob, 6020 Innsbruck (AT); Kaserer, Lukas, 6020 Innsbruck (AT)
(74) Vertreter: Ciesla, Dirk

(57) **Zusammenfassung**

Werkzeug (1) zum Reibrührschweißen, wobei zumindest ein Wirkbereich (20) des Werkzeugs (1) aus einem Werkstoff besteht, der eine Vielzahl einzelner Pulverpartikel umfasst, die durch einen energiereichen Strahl mittels eines additiven Fertigungsverfahrens zu einem festen Gefüge von Körnern (7) zusammengeschmolzen sind, und wobei der Werkstoff mindestens ein Refraktärmetall aus der Gruppe Molybdän und Wolfram oder eine Refraktärmetalllegierung auf Basis von Molybdän und / oder Wolfram und mindestens ein Element aus der Gruppe Kohlenstoff und Bor enthält, wobei der Gehalt an Refraktärmetall oder Refraktärmetalllegierung mindestens 80 at% und der Summengehalt von Kohlenstoff und Bor zwischen 1,0 und 20,0 at% beträgt.

## Beschreibung

Die vorliegende Erfindung betrifft ein Werkzeug zum Reibrührschweißen mit den Merkmalen des Oberbegriffs von Anspruch 1.

Ein Werkzeug zum Reibrührschweißen (engl.: *friction stir welding*, FSW) umfasst in der Regel einen Schaft, über den das Werkzeug in Drehung versetzt wird, sowie eine Schulter und einen Stift ("Pin").

Durch die Rotation des Pins wird ein Material in der Fügezone plastifiziert.

Als Wirkbereich wird im Folgenden der Teil des Werkzeuges bezeichnet, der im Einsatz mit dem zu fügenden Werkstück in Berührung kommt.

Die thermische und mechanische Beanspruchung des Pins beim Reibrührschweißen, insbesondere von festen oder höher schmelzenden Werkstoffen wie Stahl oder Titan, erfordert die Wahl eines hochwarmfesten Werkstoffes für den Pin. Die US2014299651 A1 (Edison Welding Institute) zeigt ein Werkzeug zum Reibrührschweißen mit einem Pin umfassend einen Werkstoff auf Basis von Molybdän.

Die EP2076352 B1 (HC Starck) offenbart ein Werkzeug zum Reibrührschweißen, wobei der Pin Wolfram und ein Oxid und/oder Carbid von einem Element, ausgewählt aus der Gruppe bestehend aus Lanthan, Hafnium, Zirkonium und Kombinationen von diesen, umfasst.

Ebenfalls bekannt sind Werkzeug zum Reibrührschweißen mit Pins aus Hartstoffen, beispielsweise aus Hartmetall (Wolframkarbid mit metallischem Binder, in der Regel Kobalt) oder aus kubischem Bornitrid (cBN).

Mohan, D.G., Wu, C. A Review on Friction Stir Welding of Steels. Chin. J. Mech. Eng. 34, 137 (2021). https://doi.org/10.1186/s10033-021-00655-3 berichten von Wolfram-Rhenium-Legierungen und polykristallinem kubischen Bornitrid für Werkzeuge zum Reibrührschweißen.

Die US20190381600 A1 (PURDUE RESEARCH FOUNDATION) zeigt ein Verfahren zur Herstellung eines Werkzeugs zum Reibrührschweißen, wobei ein poröser Körper aus Wolframkarbid (WC) mit flüssigem Zirconium infiltriert wird. Es bildet sich eine Struktur aus Wolfram-Inseln, die von Zirconiumkarbid (ZrC) umgeben sind.

Die Publikation von Ouyang, J. H., Mei, H., Valant, M., & Kovacevic, R. (2002). Application of laser-based additive manufacturing to production of tools for friction stir welding, http://dx.doi.org/10.26153/tsw/3416 ,
beschreibt die Herstellung eines Werkzeugs zum Reibrührschweißen über ein generatives Fertigungsverfahren. Das Werkzeug wird aus Pulver eines Werkzeugstahls und einem Pulver einer Nickel-Silizium-Antimon-Legierung mit Wolframkarbid-Partikeln aufgebaut.

Während das Reibrührschweißen von Aluminium längst etabliert ist, bestehen weiterhin Hürden bei der Anwendung des Verfahrens auf Stahl.

Insbesondere die hohen Temperaturen von typischerweise über 1000°C sowie das höhere Kräfteniveau als bei niedrigschmelzenden Metallen limitieren die Auswahl an wirtschaftlich nutzbaren Werkstoffen für Werkzeuge für das Reibrührschweißen von Stahl.

Refraktärmetalle wie Wolfram oder Molybdän können die erforderliche Bruchzähigkeit aufweisen, zeigen aber eine ungenügende Beständigkeit gegenüber Verschleiß.

Hartstoffe wiederum haben häufig eine ausreichende Verschleißbeständigkeit, aber eine ungenügende Bruchzähigkeit.

Aufgabe der Erfindung ist es, ein verbessertes Werkzeug zum Reibrührschweißen anzugeben.

Die Aufgabe wird gelöst durch ein Werkzeug mit den Merkmalen von Anspruch 1. Bevorzugte Weiterbildungen sind in abhängigen Ansprüchen angegeben. Ferner wird ein Verfahren zur Herstellung des Werkzeugs angegeben.

Indem zumindest ein Wirkbereich des Werkzeugs zumindest teilweise aus einem Werkstoff besteht, der eine Vielzahl einzelner Pulverpartikel umfasst, die durch einen energiereichen Strahl mittels eines additiven Fertigungsverfahrens zu einem festen Gefüge von Körnern zusammengeschmolzen sind, und wobei der Werkstoff mindestens ein Refraktärmetall aus der Gruppe Molybdän und Wolfram oder einer Refraktärmetalllegierung auf Basis von Molybdän und / oder Wolfram und mindestens ein Element aus der Gruppe Kohlenstoff und Bor enthält, wobei der Gehalt an Refraktärmetall oder Refraktärmetalllegierung mindestens 80 at% und der Summengehalt von Kohlenstoff und Bor zwischen 1,0 und 20,0 at% beträgt,
wird eine ausgezeichnete Kombination von Bruchzähigkeit und Verschleißbeständigkeit des Werkzeugs zum Reibrührschweißen erzielt.

Der Wirkbereich kann dabei den Pin alleine oder Pin und Schulter des Werkzeugs umfassen. Insbesondere besteht der Wirkbereich vollständig aus dem oben definierten Werkstoff.

Die Werkstoffeigenschaften haben sich als besonders interessant für die Verwendung als Werkzeug zum Reibrührschweißen von Stahl erwiesen. Erfindungsgemäße Werkzeuge zeigen eine hohe Standzeit und einen geringen Verschleiß bei geringen Herstellungskosten.

Der Werkstoff umfasst eine Vielzahl einzelner Pulverpartikel, die durch einen energiereichen Strahl mittels eines additiven Fertigungsverfahrens zu einem festen Gefüge umfassend eine Vielzahl von Körnern zusammengeschmolzen sind. Die ursprünglichen Pulverpartikel sind dabei vollständig unter Bildung von Körnern zusammengeschmolzen und nicht mehr erkennbar.

Damit unterscheidet sich der Werkstoff strukturell markant von einem schmelzmetallurgisch oder einem über klassische Pulvermetallurgie (Pressen und Sintern) hergestellten Material.

Mit der Darstellung über ein additives Fertigungsverfahrens unter Verschmelzen der Pulverpartikel durch einen energiereichen Strahl ist ein nur lokales Aufschmelzen und eine Erstarrung mit hoher Abkühlgeschwindigkeit verbunden, wodurch sich besondere Gefüge- und Werkstoffeigenschaften einstellen.

Der hohe Gehalt an Kohlenstoff und / oder Bor bewirkt eine Unterkühlung des lokal erzeugten Schmelzebads und führt in Folge zu einer Veränderung an der Erstarrungsfront von einem planaren zu einem zellenförmigen Kristallwachstum. So stellt sich ein besonders feinkörniges Gefüge ein.

Ferner bildet sich durch die hohen Gehalte an Kohlenstoff und / oder Bor im Werkstoff eine keramische Phase in Form von Karbiden und / oder Boriden aus, die neben einer festigkeitssteigernden Wirkung auch Träger der Verschleißfestigkeit des Werkzeugs ist.

Bevorzugt liegen die Elemente Kohlenstoff und Bor in dem den Wirkbereich bildenden Werkstoff zu wenigstens 80%, weiter bevorzugt in einem Ausmaß von wenigstens 90%, noch weiter bevorzugt in einem Ausmaß von wenigstens 95% als keramische Phase vor.

Damit ist gemeint, dass die Elemente Kohlenstoff und Bor zum größten Teil zu einer oder verschiedenen keramischen Phasen reagiert und nicht mehr elementar vorliegen.

Insbesondere sind die Elemente Kohlenstoff und Bor vollständig zu Karbiden bzw. Boriden reagiert.

Die Karbide und / oder Boride sind bevorzugt als Karbide und / oder Boride des Refraktärmetalls aus der Gruppe Molybdän und Wolfram gebildet. Es können je nach Zusammensetzung also Karbide und / oder Boride des Molybdäns, des Wolframs oder beider Refraktärmetalle vorhanden sein. Auch Mischkarbide und / oder Mischboride der Refraktärmetalle Molybdän und Wolfram können vorhanden sein.

Das bedeutet für das Beispiel von Molybdän als metallische Phase, dass die keramische Phase aus Karbiden und / oder Boriden des Molybdäns gebildet ist. Insbesondere besteht in diesem Beispiel die karbidische keramische Phase aus Molybdänkarbid, insbesondere aus Dimolybdänkarbid (Mo₂C) oder Molybdän(IV)-karbid. Bei Vorhandensein von Bor umfasst die keramische Phase ferner Boride des Molybdän.

So weist beispielsweise eine Legierung bestehend aus 96,5 at. % (Atomprozent) Molybdän und 3,5 at. % Kohlenstoff einen Gehalt von rund 8,7 vol.% (Volumenprozent) Molybdänkarbid (Mo₂C) auf. Wird anstatt von Kohlenstoff Bor mit 3,5 at.% dem Molybdän zugegeben, erhält man einen Anteil von 8,2 vol.% Borid (MozB) im Gefüge.

Eine Legierung bestehend aus 95,0 at. % (Atomprozent) Molybdän und 5,0 at. % Kohlenstoff weist einen Gehalt von rund 12,45 vol.% (Volumenprozent) Molybdänkarbid auf.

Bevorzugt weist der Werkstoff einen Gehalt an Karbiden und / oder Boriden von wenigstens 5 vol. % auf.

Weiter bevorzugt weist der Werkstoff einen Gehalt an Karbiden und / oder Boriden von wenigstens 10 vol. % auf.

Die metallische Phase sorgt dabei für eine hohe Bruchzähigkeit des Werkstoffs.

Die keramische Phase bewirkt eine hohe Härte und damit Verschleißbeständigkeit sowie auch eine hohe Warm- und Kriechfestigkeit des Werkstoffs.

In einer Variante liegt der Werkstoff zumindest teilweise in einer zellenartigen Mikrostruktur vor. Das bedeutet vorliegend, dass Körner der metallischen Phase zumindest teilweise eine Sub-Korn-Struktur aufweisen. Bei dieser Sub-Korn-Struktur bestehen innerhalb eines Korns - im Zusammenhang dieser Anmeldung als Zellen bezeichnete - Bereiche metallischer Phase, die von keramischer Phase umgeben sind. Die keramische Phase bildet ein Netzwerk um die Sub-Körner der metallischen Phase. Insbesondere besteht der Wirkbereich des Werkzeugs vollständig aus dem Werkstoff mit zellenartiger Mikrostruktur.

Anders als bei bekannten Verbundwerkstoffen, bei denen Hartstoffe wie Karbide, Boride oder Silizide weitgehend gleichmäßig in einer metallischen Matrix eingebettet sind, führt die zellenartige Mikrostruktur zu besonders ausgewogenen Werkstoffeigenschaften. Die zellenartige Mikrostruktur erlaubt einen hohen Volumenanteil an keramischer Phase, ohne dass der Werkstoff versprödet, wie es bei Molybdän und Wolfram mit derart hohen Gehalten an Kohlenstoff und/oder Bor zu erwarten wäre.

Die zellenartige Mikrostruktur weist auch eine sehr gute Korngrenzenfestigkeit auf. An Bruchproben zeigt sich ein vorwiegend transkristallines Bruchbild. Das bedeutet, dass ein Bruch vorwiegend durch die Körner verläuft.

Bei einem interkristallinen Bruch hingegen erfolgt ein Bruch entlang von Korngrenzen, das heißt zwischen Körnern.

Die aufzuwendende Energie für eine transkristalline Rissausbreitung ist deutlich höher als für einen interkristallinen Bruch. Dementsprechend weist der Werkstoff mit zellenartiger Mikrostruktur eine besonders hohe Bruchzähigkeit auf.

Bevorzugt beträgt eine mittlere Zellgröße der Zellen der zellenartigen Mikrostruktur zwischen 0,1 µm und 4 µm. Weiter bevorzugt beträgt die mittlere Zellgröße zwischen 0,5 µm und 2 µm.

Bevorzugt ist vorgesehen, dass die keramische Phase eine partikulare und / oder kontinuierliche Zellgrenze der Zellen bildet. Dies bringt zum Ausdruck, dass die keramische Phase die Zellen in Form diskreter Partikel und / oder als geschlossener Pfad begrenzt. In anderen Worten bilden Karbide und / oder Boride einen Saum um die metallische Phase, der perlenkettenartig oder kontinuierlich sein kann. Dabei sind Mischformen von partikularer und kontinuierlicher Ausprägung der Zellgrenzen möglich.

Bevorzugt ist vorgesehen, dass die keramische Phase zumindest teilweise kohärent oder teilkohärent zur metallischen Phase ist. Kohärent bedeutet in diesem Zusammenhang, dass eine Gitterstruktur der von der keramischen Phase gebildeten Zellgrenze in eine Gitterstruktur der metallischen Phase übergeht.

Eine zumindest teilweise Kohärenz zwischen der keramischen und der metallischen Phase führt zu einer Festigkeitssteigerung durch eine Verspannung des Kristallgitters. Im Vergleich zu einer inkohärenten Grenzfläche gewährleistet eine kohärente oder zumindest teilweise kohärente Grenzfläche eine höhere Grenzflächenfestigkeit, was sich in einer höheren Bruchzähigkeit widerspiegelt.

Die Kohärenz kann z.B. durch eine Untersuchung im

Transmissionselektronenmikroskop (TEM) nachgewiesen werden.

Bevorzugt weist der den Wirkbereich bildende Werkstoff Körner mit einer ausgeprägten Streckung entlang einer Längserstreckung des Werkzeugs auf. In anderen Worten liegt die metallische Phase in Form von entlang einer Längserstreckung des Werkzeugs gestreckten Körnern vor. Diese Anisotropie ist hinsichtlich der beim Reibrührschweißen auftretenden mechanischen Belastungen besonders vorteilhaft.

Diese Ausprägung der Mikrostruktur lässt sich durch den Herstellungsweg durch einen energiereichen Strahl mittels eines additiven Fertigungsverfahrens einstellen und beeinflussen.

Bevorzugt ist vorgesehen, dass eine mittlere Korngröße quer zu einer Längserstreckung des Werkzeugs zwischen 5 µm und 75 µm beträgt.

Einzelne Körner sind über Großwinkelkorngrenzen voneinander getrennt und über diese mittels EBSD unterscheidbar.

Körner umfassen metallische und keramische Phase.

Bevorzugt ist vorgesehen, dass eine mittlere Korngröße parallel zu einer Längserstreckung des Werkzeugs zwischen 20 µm und 100 µm beträgt.

Bevorzugt beträgt ein Kornstreckungsverhältnis (mittlere Korngröße in Längsrichtung durch mittlere Korngröße quer zur Längsrichtung) wenigstens 1,5. Weiter bevorzugt beträgt das Kornstreckungsverhältnis wenigstens 2.

Die Korngröße ist beispielsweise durch eine Gefügeanalyse eines metallografischen Schliffs oder durch Auswertung einer EBSD-Analyse zugänglich.

Es ist vorteilhaft, wenn eine mittlere Zellgröße der zellenartigen Mikrostruktur zwischen 0,1 µm und 4 µm beträgt. Weiter bevorzugt beträgt die mittlere Zellgröße zwischen 0,5 µm und 2 µm.

Bevorzugt ist vorgesehen, dass ein Kohlenstoffgehalt des Werkstoffs zwischen 1,6 at.% und 16 at.% beträgt.

Insbesondere bevorzugt ist es, wenn die Zusammensetzung untereutektisch ist. Das bedeutet, dass die Zusammensetzung bezüglich des Kohlenstoffgehalts unter der eutektischen Zusammensetzung liegt. Besteht der Werkstoff ausschließlich aus Molybdän (Mo) und Kohlenstoff (C), liegt die eutektische Zusammensetzung bei 17 at.% (Atomprozent) Kohlenstoff. Weitere Legierungs- und / oder Dotierungselemente können die Lage des eutektischen Punkts verschieben. Dies ist über das jeweilige Phasendiagramm oder thermodynamische Berechnung zugänglich.

Der Kohlenstoff kann ganz oder teilweise durch Bor ersetzt sein. Bevorzugt ist dabei ein Gehalt an Bor (B) zwischen 200 µg/g und 32500 µg/g.

Der Volumenanteil der von Karbiden und / oder Boriden gebildeten keramischen Phase beträgt bevorzugt zwischen 3,5% vol.% (Volumenprozent) und 50 vol.%.

Wird beispielsweise eine Zusammensetzung von Molybdän mit 3,5 at.% Kohlenstoff (entspricht in Gewichtsprozent Mo - 0,45 wt.% C) gewählt, beträgt der Volumenanteil des Molybdänkarbids etwa 8,5 vol.%. Dabei wird davon ausgegangen, dass der zugegebene Kohlenstoff vollständig zu Molybdänkarbid (Mo₂C) reagiert.

Wird anstatt von Kohlenstoff 3.5 at.% Bor dem Molybdän zugegeben, erhält man einen Anteil von 8,2 vol.% Borid (MozB) im Gefüge.

Bei der eutektischen Zusammensetzung von Mo und C (17at.%) werden deutlich höhere Volumenanteile von Karbiden erzielt. Ein Werkstoff dieser Zusammensetzung weist eine sehr hohe Härte auf. Dies könnte für bestimmte Anwendungen des Reibrührschweißens nützlich sein, beispielsweise wenn besonders harte und / oder abrasive Materialien geschweißt werden.

Übliche Verunreinigungen liegen typischerweise unter 1,0 at.%. Kohlenstoff und Bor werden im Zusammenhang mit dieser Anmeldung nicht als Verunreinigung betrachtet.

Ein Gesamtgehalt an metallischen und nicht-metallischen Verunreinigungen beträgt bevorzugt ≤ 1000 µg/g, weiter bevorzugt ≤ 500 µg/g, noch weiter bevorzugt ≤ 300 µg/g.

Ein Nachweis der metallischen Phasen wie Wolfram, Molybdän sowie Wolframkarbid (z.B. W₂C), Molybdänkarbid (z.B. MozC), Wolframborid ( z.B. W₂B), Molybdänborid (z.B. MozB) kann insbesondere über Röntgenbeugung (engl.: *X-ray diffraction*, XRD) oder Transmissionselektronenmikroskopie (TEM) erfolgen.

Ein Nachweis der Mikrostruktur (des Gefüges) sowie der Korngrößen kann über metallographische Verfahren an einem Schliff erfolgen.

Insbesondere wird zur Unterscheidung der Phasen und der Korngrößenbestimmung das Verfahren der Elektronenrückstreubeugung (engl.: *Electron backscatter diffraction*, EBSD) eingesetzt.

Der Volumenanteil der metallischen Phase ist komplementär zum Volumenanteil der keramischen Phase, abzüglich eines etwaigen Porenanteils. In anderen Worten ergänzen sich die Volumenanteile der keramischen Phase, der metallischen Phase und der Poren zu 100 vol. %.

Die jeweiligen Volumenanteile sind über eine quantitative Gefügeanalyse zugänglich.

Eine Porosität beträgt bevorzugt ≤ 3%, weiter bevorzugt ≤ 2%, insbesondere ≤ 1%. Die Porosität ist beispielsweise gravimetrisch, nach dem Archimedischen Prinzip oder mit mikroskopischen Methoden in Verbindung mit Bildanalyse bestimmbar.

Die metallische Phase besteht aus Molybdän und / oder Wolfram oder einer Refraktärmetalllegierung.

In einer Refraktärmetalllegierung sind in diesem Zusammenhang wenigstens 50 at. % (Atom-Prozent) Molybdän und / oder Wolfram enthalten.

Insbesondere besteht die metallische Phase zu wenigstens 90 at.% aus Molybdän und / oder Wolfram.

Besonders bevorzugt besteht die metallische Phase vollständig aus Molybdän und / oder Wolfram.

Insbesondere bevorzugt ist der Werkstoff aus Molybdän und mindestens einem Element aus der Gruppe Kohlenstoff und Bor sowie den unvermeidlichen Verunreinigungen gebildet.

Die Karbide und / oder Boride sind insbesondere Karbide und / oder Boride des jeweiligen Refraktärmetalls, welches die metallische Phase bildet.

Die Refraktärmetallkarbide sind insbesondere die Spezies Molybdänkarbid (insbesondere Mo₂C) und, sofern die metallische Phase Wolfram enthält, Wolframkarbid (insbesondere W₂C) sowie Mischkarbide davon. Die Stöchiometrie der karbidischen Phasen kann gegebenenfalls von den oben genannten Summenformeln abweichen. Aufgrund der bevorzugten Fertigungsroute über ein generatives Herstellungsverfahren mit extrem hohen Erstarrungsgeschwindigkeiten können sich über- und unterstöchiometrische Zusammensetzungen der Karbide einstellen, die möglicherweise thermodynamisch instabil aber kinetisch stabil sind.

Die Refraktärmetallboride sind insbesondere die Spezies Wolframborid (insbesondere W₂B) und Molybdänborid (insbesondere MozB) sowie Mischboride davon.

Wie für die Karbide ausgeführt, können Abweichungen der Stöchiometrie von den oben genannten Summenformeln auftreten.

Jedenfalls liegt der überwiegende Anteil der Karbide und Boride mit den oben genannten Summenformeln vor, wie eine Phasenbestimmung über Röntgenbeugung (eng.: *X-ray diffraction*, XRD) ergeben hat.

Besonders vorteilhaft an einer Ausbildung des Werkstoffs mit Molybdänkarbid als keramische Phase ist die hohe Wärmeleitfähigkeit von Molybdänkarbid.

So bleibt auch bei hohen Gehalten von Molybdänkarbid eine günstige Wärmeleitfähigkeit des Werkstoffs erhalten.

Das Werkzeug ist erhältlich über ein generatives strahlbasiertes Fertigungsverfahren, insbesondere über Laser Powder Bed Fusion (LPBF). Dabei wird mittels einer Rakel eine Pulverschicht auf einer Substratplatte aufgebracht. Anschließend wird ein Laserstrahl über diese Pulverlage geführt. Der Laser schmilzt die Pulverpartikel lokal auf, wodurch die einzelnen Pulverpartikel miteinander und mit der zuvor aufgebrachten Lage zusammenschmelzen. Eine Lage des zu fertigenden Bauteils entsteht somit durch sukzessives lokales Schmelzen und anschließendes Erstarren von Pulverpartikeln. Anschließend wird eine weitere Pulverlage aufgebracht und der Prozess beginnt erneut. Das Bauteil wird somit mit jeder neuen Pulverlage weiter aufgebaut, wobei die Aufbaurichtung normal zu den jeweiligen Ebenen der Pulverlagen angeordnet ist.

Durch die bahnenweise Führung des Laserstrahls bildet sich in jeder Pulverlage eine sogenannte Scanstruktur aus.

Ferner bildet sich in Aufbaurichtung, welche durch die Aufbringung einer neuen Pulverlage bestimmt wird, eine ebenfalls typische Lagenstruktur aus. Die Scanstruktur und die Lagenstruktur sind für den Fachmann am fertigen Bauteil erkennbar. Somit ist es dem Fachmann möglich, zu erkennen, ob ein Bauteil durch einen konventionellen oder einen Additiven Prozess hergestellt ist.

Aufgrund der Dichteunterschiede zwischen Karbiden / Boriden und der metallischen Phase ist das erfindungsgemäße Gefüge nicht über eine klassische schmelzmetallurgische Route zugänglich.

Die Erfindung betrifft ferner ein Verfahren zur Herstellung eines Werkzeugs zum Reibrührschweißen.

Das Verfahren zur Herstellung umfasst die Schritte:
- Bereitstellen einer Pulvermischung umfassend Pulver von Refraktärmetall oder Refraktärmetalllegierung sowie Kohlenstoff und / oder Bor oder Bereitstellen eines zumindest teilweise vorlegierten Pulvers umfassend mindestens ein Refraktärmetall aus der Gruppe Molybdän und Wolfram sowie Kohlenstoff und / oder Bor
- generativer Aufbau zumindest eines Abschnitts des Werkzeugs durch lagenweisen Auftrag der Pulvermischung und Konsolidierung der Pulvermischung durch Einwirkung eines Energiestrahls.

Zur Herstellung der Pulvermischung wird einem Pulver von Refraktärmetall der Gruppe Molybdän oder Wolfram oder einer Refraktärmetalllegierung Kohlenstoff und / oder Bor zugesetzt. Dies kann beispielsweise durch Zumischen in fester Form, über die Gasphase oder über einen Slurry erfolgen. Es können Pulvermischungen von Refraktärmetall mit Kohlenstoff und / oder Bor oder teilweise oder vollständig vorlegierte Pulver eingesetzt werden. Bei teilweise vorlegierten Pulvern können Legierungskomponenten zumindest teilweise elementar vorliegen. Bei vollständig vorlegierten Pulvern weisen die individuellen Pulverpartikel selbst bereits die nominelle

Legierungszusammensetzung auf.

Die Pulvermischung wird durch Mischen homogenisiert.

Der generative Aufbau zumindest eines Abschnitts des Werkzeugs erfolgt insbesondere durch ein strahlbasiertes Verfahren. Dazu wird lagenweise Pulvermischung bzw. das teilweise oder vollständig vorlegierte Pulver auf eine Bauplatte aufgezogen. Ein Energiestrahl erschmilzt lokal die Pulvermischung bzw. das teilweise oder vollständig vorlegierte Pulver. Nach der Erstarrung verbleibt eine feste Struktur. Der Vorgang wird so oft wiederholt, bis das gewünschte Bauteil erhalten ist.

Optional kann eine Nachbehandlung stattfinden.

So kann eine Wärmebehandlung durchgeführt werden, um etwaige thermische Spannungen abzubauen und / oder das Gefüge zu homogenisieren.

Die Temperatur einer etwaigen Wärmebehandlung wird bevorzugt so gewählt, dass die zellenartige Mikrostruktur erhalten bleibt. Bei Temperaturen ≤ 1400°C bleibt die zellenartige Mikrostruktur weitgehend stabil. Bei Temperaturen ≥ 1400°C und längeren Haltezeiten kann ein Abbau der zellenartigen Mikrostruktur beobachtet werden.

Insbesondere wird zur Herstellung des Werkzeugs der Prozess des Laser Powder Bed Fusion (LPBF) eingesetzt. Der Energiestrahl ist hier ein Laserstrahl.

### Herstellungsbeispiel:

Beispielhaft seien Prozessparameter zur Herstellung des Werkzeugs über LPBF genannt:
Linienenergie: 0,66 J/mm
Bauraumtemperatur: >500 °C
Schichtstärke einer Pulverlage 30 µm
Pulver: d₅₀ zwischen 14-17 µm

Die Erfindung wird im Folgenden unter Bezugnahme auf die beigefügten Figuren näher erläutert.

Von den Figuren zeigen:
- Fig. 1: ein Werkzeug zum Reibrührschweißen
- Fig. 2: ein Werkzeug zum Reibrührschweißen in einem schematischen Schnitt
- Fig. 3: eine rasterelektronenmikroskopische Aufnahme des Werkstoffs quer zur Längsrichtung des Werkzeugs
- Fig. 4: eine rasterelektronenmikroskopische Aufnahme des Werkstoffs entlang der Längsrichtung des Werkzeugs
- Fig. 5: eine rasterelektronenmikroskopische Aufnahme des Werkstoffs
- Fig. 6: eine schematische Darstellung der Mikrostruktur
- Fig. 7: eine schematische Darstellung des Herstellungsverfahrens

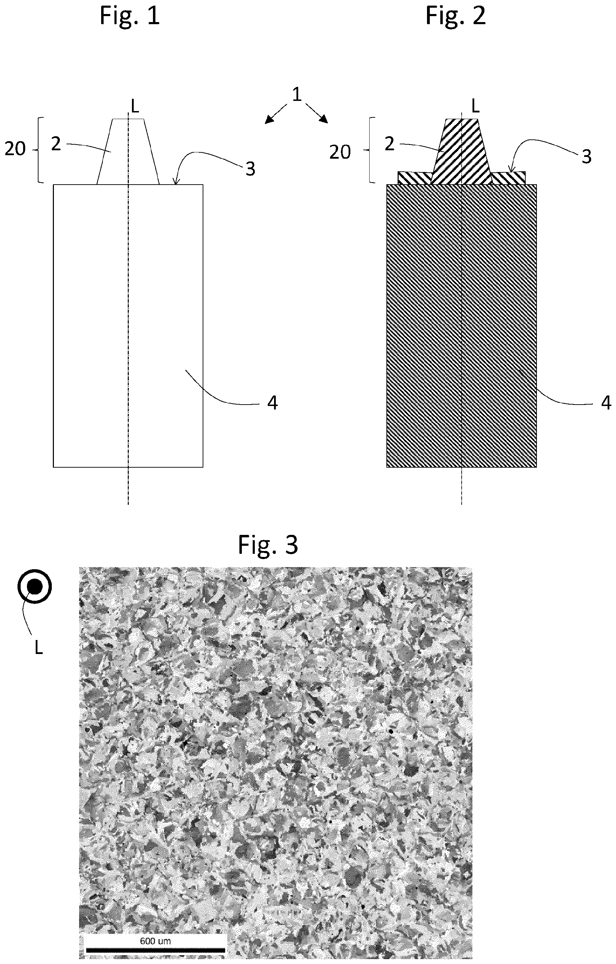

Figur 1 zeigt schematisch ein Werkzeug 1 zum Reibrührschweißen. Das Werkzeug 1 umfasst einen Pin 2 mit einer Längsrichtung L, eine Schulter 3 und einen Schaft 4, über den das Werkzeug 1 in Rotation versetzt wird.

In der vorliegenden Anmeldung wird ein Wirkbereich 20 definiert, der den Pin 2 oder Pin 2 und die Schulter 3 umfassen kann.

Der Wirkbereich 20 ist aus dem in Anspruch 1 definierten Werkstoff gebildet.

In diesem Beispiel ist der Pin 2 aus dem in Anspruch 1 definierten Werkstoff gebildet.

Der Schaft ist in der Regel aus einem davon verschiedenen Trägerwerkstoff, beispielsweise aus Stahl.

Figur 2 zeigt schematisch ein Werkzeug 1 zum Reibrührschweißen in einer alternativen Ausführungsform in einer Schnittdarstellung. Wie aus der Schnittdarstellung ersichtlich, ist hier die Schulter 3 als ein vom Schaft 4 separates Bauteil ausgebildet. Der Wirkbereich 20 umfasst hier den Pin 2 und die Schulter 3. In anderen Worten sind hier der Pin 2 und die Schulter 3 aus dem Anspruch 1 definierten Werkstoff gebildet.

Figur 3 zeigt eine rasterelektronenmikroskopische Aufnahme des den Wirkbereich 20 bildenden Werkstoffs mit einer Analyse der Elektronenrückstreubeugung (engl.: *electron backscatter diffraction*, EBSD).

Durch dieses Verfahren sind einzelne Körner über ihre unterschiedliche Orientierung unterscheidbar.

Die Betrachtungsrichtung ist entlang der Längsrichtung L. In anderen Worten liegt der gezeigte Bildausschnitt normal zur Längsrichtung L. Der Maßbalken in der Figur beträgt 600 µm.

Der Werkstoff in diesem Beispiel besteht aus Molybdän mit 4500 µg/g Kohlenstoff, entsprechend 3,48 at.% (Atomprozent) Kohlenstoff.

Man erkennt in der Darstellung ein feines Gefüge von Molybdänkörnern.

Die Korngrößenbestimmung erfolgte nach Feret. Darin wird zu einem Korn ein minimaler und ein maximaler Abstand zwischen zwei parallelen Geraden bestimmt, zwischen die das Korn hineinpasst.

Die Korngrößenbestimmung an dem gezeigten Bildausschnitt ergab eine mittlere Korndimension in der Horizontalen von rund 12 µm (Median 7 µm) und eine mittlere Korndimension in der Vertikalen von rund 6 µm (Median 4 µm).

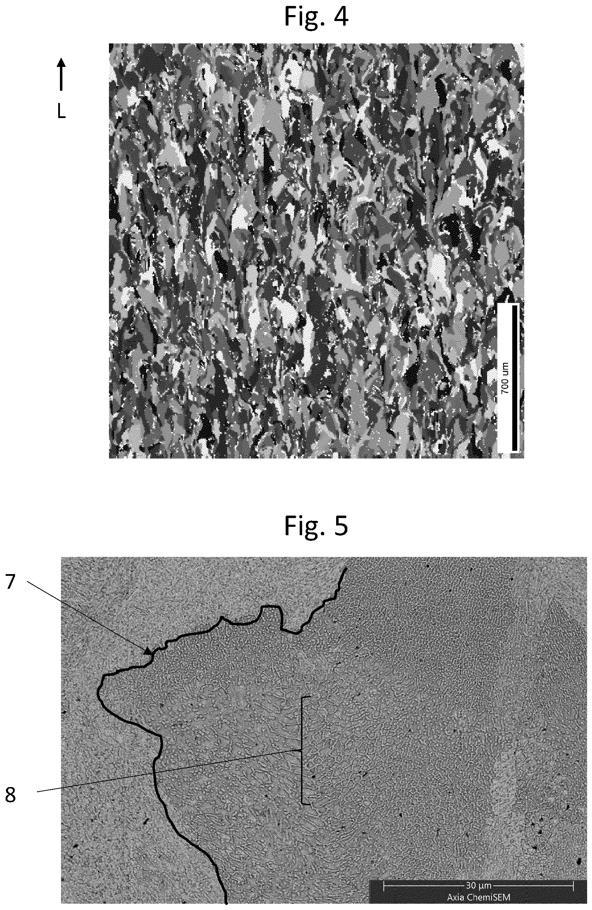

Figur 4 zeigt ebenfalls eine rasterelektronenmikroskopische Aufnahme des den Wirkbereich 20 bildenden Werkstoffs mit EBSD, am gleichen Werkstoff wie von Figur 3. Der gezeigte Bildausschnitt entstammt einem Längsschnitt entlang der Längsrichtung L. Die Betrachtungsrichtung ist normal zur Längsrichtung L. Der Maßbalken in der Figur beträgt 700 µm.

Man erkennt eine ausgeprägte Streckung der Körner in Längsrichtung L.

Die Korngrößenbestimmung nach Feret ergab eine mittlere Korngröße in Längsrichtung L von 53 µm (Median 38 µm) und 24 µm (Median 18 µm) quer dazu.

Daraus ergibt sich ein Kornstreckungsverhältnis (mittlere Korngröße in Längsrichtung L durch mittlere Korngröße quer zur Längsrichtung L) von größer als 2.

Die ausgeprägte Streckung der Körner in Längsrichtung L ist wegen der Biegebeanspruchung des Werkzeugs mechanisch vorteilhaft.

Bevorzugt beträgt das Kornstreckungsverhältnis wenigstens 1,5 (eins Komma fünf), insbesondere wenigstens 2.

Figur 5 zeigt eine rasterelektronenmikroskopische Aufnahme des den Wirkbereich 20 bildenden Werkstoffs in einem Gefügezustand einer Weiterbildung.

An dem vorliegenden Gefüge ist eine zellenartige Mikrostruktur erkennbar. Innerhalb eines Korns 7 besteht eine zellenartige Sub-Korn-Struktur. Sub-Korn-Struktur bedeutet, dass innerhalb eines Korns 7 weitere organisierte Bereiche, sogenannte Zellen 8, bestehen, die unterhalb einer Größenordnung des Korns 7 vorliegen.

Bevorzugt besteht der Wirkbereich 20 des Werkzeugs 1 vollständig aus dem Werkstoff mit zellenartiger Mikrostruktur.

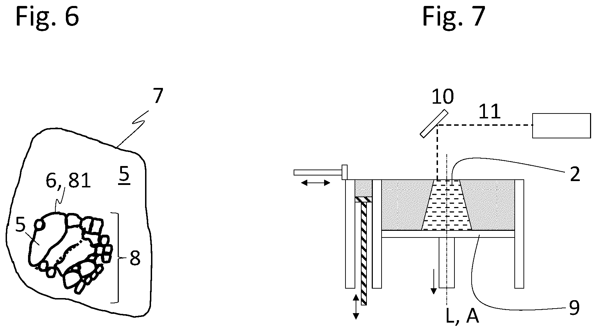

Figur 6 zeigt eine schematische Skizze eines Korns 7 zur Erläuterung des in Figur 5 gezeigten zellenartigen Gefügezustands.

Innerhalb eines Korns 7 sind mehrere Zellen 8 aus der metallischen Phase 5 gebildet, welche von einer keramischen Phase 6 umgeben sind.

Die keramische Phase 6 bildet eine Zellgrenze 81 der Zellen 8.

Die Zellgrenze 81 kann kontinuierlich, das heißt geschlossen sein oder als partikularer Saum ausgebildet sein, wie in der schematischen Darstellung über Punkte illustriert. Ersichtlich umfasst ein Korn 7 eine Vielzahl von Zellen 8.

Der Übersichtlichkeit halber ist hier nur ein Paket von mehreren Zellen 8 innerhalb des Korns 7 dargestellt. Bevorzugt jedoch ist das gesamte Korn 7 und weiter bevorzugt alle Körner 7 des den Wirkbereich 20 bildenden Werkstoffs von der zellenartigen Mikrostruktur geprägt. Insbesondere ist der Wirkbereich 20 vollständig von dem beschriebenen Werkstoff gebildet.

Fig. 7 zeigt eine schematische Darstellung des Herstellverfahrens eines Pins 2 über Laser Powder Bed Fusion (LPBF).

Der Pin 2 wird generativ aus einer Pulvermischung bzw. aus teilweise oder vollständig vorlegiertem Pulver von Refraktärmetall und Kohlenstoff und / oder Bor aufgebaut.

Über eine Pulverzuführung wird aus einem Pulvervorrat lagenweise Pulver auf eine Substratplatte 9 aufgebracht.

Ein über eine Optik 10 geführter Laserstrahl 11 überstreicht ("scannt") die Pulverlage und erschmilzt dabei Pulverpartikel an von einer Steuerung vorgesehenen Positionen. Darauf wird die Substratplatte 9 abgesenkt und eine neue Pulverlage aufgezogen.

Der Vorgang wird wiederholt, bis das Bauteil, vorliegend der Pin 2, seine Endform erhalten hat.

Die sogenannte Aufbaurichtung A entspricht hier und bevorzugt der Längsrichtung L des Bauteils, Pin 2.

Der lokale Wärmeeintrag bei dem LPBF-Verfahren zusammen mit der starken Wärmeabfuhr an die Umgebung der Schmelzzone führt an der Erstarrungsfront zum Effekt der konstitutionellen Unterkühlung. Die Ausbildung der zellenartigen Mikrostruktur wird damit in Zusammenhang gebracht.

## Patentansprüche

1. Werkzeug (1) zum Reibrührschweißen, wobei zumindest ein Wirkbereich (20) des Werkzeugs (1) zumindest teilweise aus einem Werkstoff besteht, der eine Vielzahl einzelner Pulverpartikel umfasst, die durch einen energiereichen Strahl mittels eines additiven Fertigungsverfahrens zu einem festen Gefüge von Körnern (7) zusammengeschmolzen sind, und wobei der Werkstoff mindestens ein Refraktärmetall aus der Gruppe Molybdän und Wolfram oder eine Refraktärmetalllegierung auf Basis von Molybdän und / oder Wolfram und mindestens ein Element aus der Gruppe Kohlenstoff und Bor enthält, wobei der Gehalt an Refraktärmetall oder Refraktärmetalllegierung mindestens 80 at% und der Summengehalt von Kohlenstoff und Bor zwischen 1,0 und 20,0 at% beträgt.

2. Werkzeug (1) nach Anspruch 1, wobei die Elemente Kohlenstoff und Bor in dem den Wirkbereich (20) bildenden Werkstoff zu wenigstens 80% als keramische Phase (6) vorliegen.

3. Werkzeug (1) nach Anspruch 1 oder 2, wobei die keramische Phase (6) von Karbiden und / oder Boriden von Molybdän und / oder Wolfram gebildet ist.

4. Werkzeug (1) nach einem der vorangegangenen Ansprüche, wobei der Werkstoff zumindest teilweise in einer zellenartigen Mikrostruktur vorliegt mit Zellen (8) aus einer metallischen Phase (5) sowie einer diese Zellen (8) umgebenden keramischen Phase (6) umfassend Karbide und / oder Boride.

5. Werkzeug (1) nach Anspruch 4, wobei eine mittlere Zellgröße der Zellen (8) der zellenartigen Mikrostruktur zwischen 0,1 µm und 4 µm beträgt.

6. Werkzeug (1) nach einem der vorangegangenen Ansprüche, wobei die der Werkstoff in Form von entlang einer Längserstreckung (L) des Werkzeugs (1) gestreckten Körnern (7) vorliegt.

7. Werkzeug (1) nach einem der vorangegangenen Ansprüche, wobei eine mittlere Korngröße der Körner (7) quer zur Längserstreckung (L) des Werkzeugs (1) zwischen 5 µm und 75 µm beträgt.

8. Werkzeug (1) nach einem der vorangegangenen Ansprüche, wobei eine mittlere Korngröße der Körner (7) parallel zur Längserstreckung (L) des Werkzeugs (1) zwischen 20 µm und 150 µm beträgt.

9. Werkzeug (1) nach einem der vorangegangenen Ansprüche, wobei ein Kornstreckungsverhältnis, ausgedrückt durch das Verhältnis der mittleren Korngröße in Längsrichtung zur mittleren Korngröße quer zur Längsrichtung wenigstens 1,5 beträgt.

10. Werkzeug (1) nach einem der vorangegangenen Ansprüche, wobei ein Kohlenstoffgehalt des den Wirkbereich (20) bildenden Werkstoffs zwischen 1,6 at.% und 16 at.% beträgt, wobei die Zusammensetzung insbesondere untereutektisch ist.

11. Werkzeug (1) nach einem der vorangegangenen Ansprüche, wobei ein Volumenanteil der keramischen Phase (6) zwischen 3,5 vol.% und 50 vol.% beträgt.

12. Verfahren zur Herstellung eines Werkzeugs (1) zum Reibrührschweißen, wobei das Verfahren die Schritte umfasst:
- Bereitstellen einer Pulvermischung oder eines zumindest teilweise vorlegierten Pulvers umfassend mindestens ein Refraktärmetall aus der Gruppe Molybdän und Wolfram sowie Kohlenstoff und / oder Bor,
- generativer Aufbau zumindest eines Abschnitts des Werkzeugs (1), insbesondere eines Wirkbereichs (20) des Werkzeugs (1), durch lagenweisen Auftrag und Konsolidierung der Pulvermischung oder des zumindest teilweise vorlegierten Pulvers durch Einwirkung eines Energiestrahls, wobei der Energiestrahl die einzelnen Pulverpartikel zu einem festen Gefüge verschmilzt.

13. Verwendung eines Werkstoffs, der eine Vielzahl einzelner Pulverpartikel umfasst, die durch einen energiereichen Strahl mittels eines additiven Fertigungsverfahrens zu einem festen Gefüge zusammengeschmolzen sind, und wobei der Werkstoff mindestens ein Refraktärmetall aus der Gruppe Molybdän und Wolfram und mindestens ein Element aus der Gruppe Kohlenstoff und Bor enthält, wobei der Gehalt an Refraktärmetall mindestens 80 at% und der Summengehalt von Kohlenstoff und Bor zwischen 1,0 und 20,0 at% beträgt, für ein Werkzeug zum Reibrührschweißen.

14. Verfahren zum Reibrührschweißen mit einem Werkzeug nach wenigsten einem der Ansprüche 1 bis 11.
